# EUROPEAN PATENT SPECIFICATION

(11) **EP 0 652 617 B1**
(45) Date of publication and mention of the grant of the patent: **11.12.1996**
(21) Application number: 94115401.5
(22) Date of filing: 29.09.1994
(51) Int. Cl.: H02G 1/12, H01R 43/05

(54) **Electric cable for connector and its production method and apparatus**
Elektrischer Kabel für Verbinder sowie Produktionsverfahren und Einrichtung
Câble électrique pour connecteur et sa méthode et son dispositif de fabrication

(30) Priority: 29.09.1993 JP 268334/93
(43) Date of publication of application: 10.05.1995
(73) Proprietor: Sumitomo Wiring Systems, Ltd., Yokkaichi-shi Mie-ken (JP)
(72) Inventor: Takanashi, Hitoshi, c/o Sumitomo Wiring Systems L, Yokkaichi-shi, Mie-ken (JP)
(74) Representative: KUHNEN, WACKER & PARTNER

(56) References cited:
- GB-A- 1 410 628
- US-A- 3 965 570
- US-A- 4 019 409
- US-A- 5 272 941

## Description

### BACKGROUND OF THE INVENTION

### Field of the Invention

The present invention relates to an electric cable for a connector, the cable being connected to a terminal fitting of the connector and a method and apparatus for its production.

### Description of the Prior Art

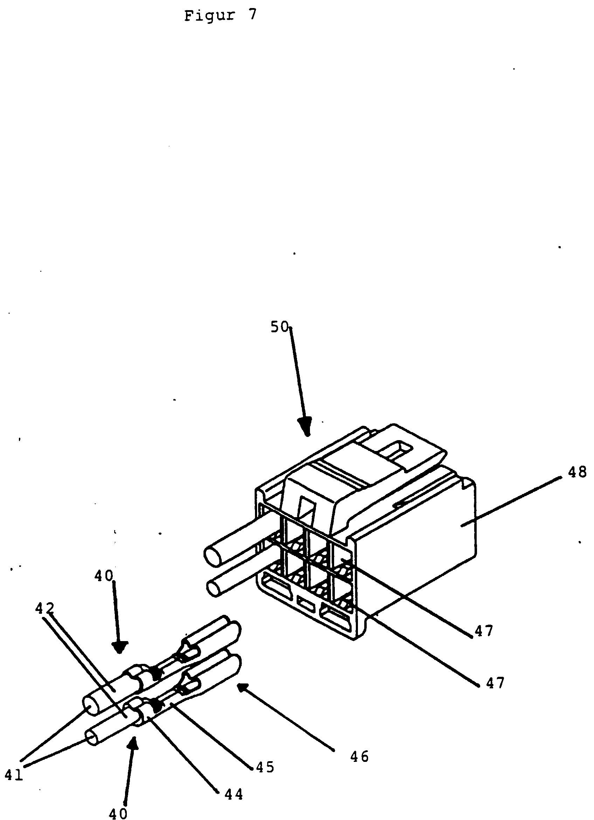

In making a connection between an electric cable 40 and a connector 50 a known general configuration is shown in Fig. 7. which is used for automobiles. The electric cable 40 comprises core wires 41 covered with an insulation covering 42. In making the connection, firstly an insulation covering at the tip is uncovered with a stripping machine to expose the core wire 41. Furtheron, a caulking is made so as to have the insulation barrel 44 of the terminal fitting 46 hold the tip of the insulation covering 42 of the electric cable 40 and have the wire barrel 45 hold the core wire 41 of the electric cable 40 to fasten the terminal fitting 46 to the tip of the electric cable 40, thereby fastening the terminal fitting 46 to the tip part of the electric cable 40. The electric cable 40 thus having the terminal fitting 46 fastened is inserted into the cavity 47 in the connector housing 48, and then, the terminal fitting 46 is fixed in the connector housing 48 in such a state that the tip part of the insulation covering 42 is advanced into the cavity 47 in the housing 48.

Depending on the position at which the connector for automobile is used, an abrasion resistant electric cable may have to be used. As such a cable has thick insulation covering, the outer diametrical size of the whole electric cable inevitably becomes larger. For this reason, with the connector housing having a normal specification, it is impossible to have the tip part of such an abrasion resistant electric cable advance into the cavity, and it is not possible to provide the insulation barrel part of the terminal fitting with crimping onto the insulation covering. Accordingly, there have been such problems that the connector housing or the terminal fitting has to be redesigned to the size of the cable or fine normal cable has to be connected to the tip of the coarse abrasion resistant cable through a splicing terminal.

### SUMMARY OF THE INVENTION

The present invention was made to cope with the situation as mentioned above, and therefore its objects are to provide an electric cable for connector which allow connection to the connector having a normal specification even in case the thickness of the insulation covering is larger, and a method and apparatus for its production.

The electric cable for a connector according to the present invention as defined in claim 1 comprises a conductive core covered with an insulating covering, a portion of said conductive core and of said insulating covering passing into said connector, characterised in that the diameter of the insulating covering of the portion of the cable positioned in said connector is smaller than that of the rest of the cable. The insulation covering is preferrably made of sythetic resin.

With the electric cable for a connector as defined in Claim 1, as the diametrical size of the insulation covering of the portion positioned in said connector housing is smaller than that of others, the tip portion of the insulation covering can easily be advanced into the cavity in the connector housing having a normal specification and size, and can be fastened by caulking at the insulation barrel part of the terminal fitting having a normal specification and size.

The method for producing an electric cable for a connector as defined in claim 3 comprises the step stripping the insulation covering from an end portion of said cable so as to expose the core wires and the step of cutting only the periphery of that portion of the insulation covering which is inserted into the connector housing, so as to make the diametrical size of the insulation covering of said portion smaller than that of the rest of the cable.

According to the method for producing the connector cable according to Claim 4, the insulation covering is removed at a tip portion in total and, simultaneously at a portion subsequent to said tip portion only partly with an insulation covering of reduced diameter remaining. Consequently, there is no need to provide a separate process for cutting.

The insulation stripping apparatus as defined in claim 5 comprises clamp and holding means for positioning the cable in said stripping apparatus and for fixing it there. Cutter support means are provided, movable mounted with respect to said calble. A plurality of insulation cutters is mounted on said cutter support means to cut through the insulation covering on said cable with different depths, through to the wire core of the cable at a tip portion of the cable and with a depth smaller than the total thickness of the insulation covering at a portion further away from the tip portion of the cable. Movement of said cutter support means removes said insulation covering totally at the tip portion of said cable to expose the core wire and partially at the portion of said cable subsequent to said tip portion, enabling said portion to be smaller in diameter than the rest of said insulation covering.

Depending claims are directed to preferred embodiments of the invention.

As described above, according to the electric cable for a connector of the present invention, excellent effects can be demonstrated in that the connector housing and terminal fitting having a normal specification and size and can be utilised without the need for re-designing the connector housing or terminal fitting even in case of the thick insulation covering, because of the tip part of the insulation covering being made smaller in diameter.

Other objects and features of the invention will become apparent from the following detailed description of embodiments thereof taken in connection with the accompanying drawings.

### BRIEF DESCRIPTION OF THE DRAWINGS

Fig. 1 is a sectional view of the cable connector combination according to the present invention.

Fig. 2(a) is an enlarged sectional view of an electric cable used in the present invention before stripping.

Fig. 2(b) is view similar to that of Figure 2(a) after the cable has been stripped.

Fig. 3 is a perspective view of an integral part of the stripping machine.

Fig. 4 is a plan view of a portion of the stripping machine of Figure 3 with the clamping axis out of contact with the insulation covering and the cutters in inoperative position.

Fig. 5 is a similar view to that of Figure 4 with the clamping arms and the cutters in operative position.

Fig. 6 is a view similar to that of Figs. 4 and 5 showing, along with a stripping step, a state at which the periphery of the insulation covering is removed.

Fig. 7 is perspective view of a connector known in the prior art.

### DETAILED DESCRIPTION OF THE PREFERRED EMBODIMENT

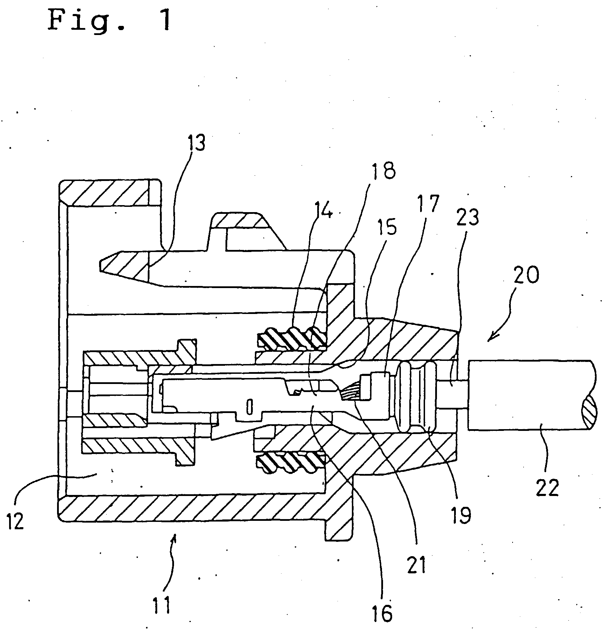

As shown in Fig. 1, the connector housing 11 is of a general structure comprising a hood 12 in which a non-illustrated opposite side connector is to be inserted, a locking part 13 with which the said opposite side connector is to be engaged, a water-proof seal 14, and a cavity 15, with a terminal fitting 16 inserted into the cavity 15.

The terminal fitting 16 is also of a general structure having an insulation barrel 17 to hold the insulation covering 22 of the electric cable 20 and a wire barrel 18 to hold the core wire 21 of the electric cable 20. Its insulation barrel 17 is to hold the insulation covering 22 by providing the sealing or caulking through a rubber wire seal 19 which is subjected to an inserted state being pressed fit into the cavity 15.

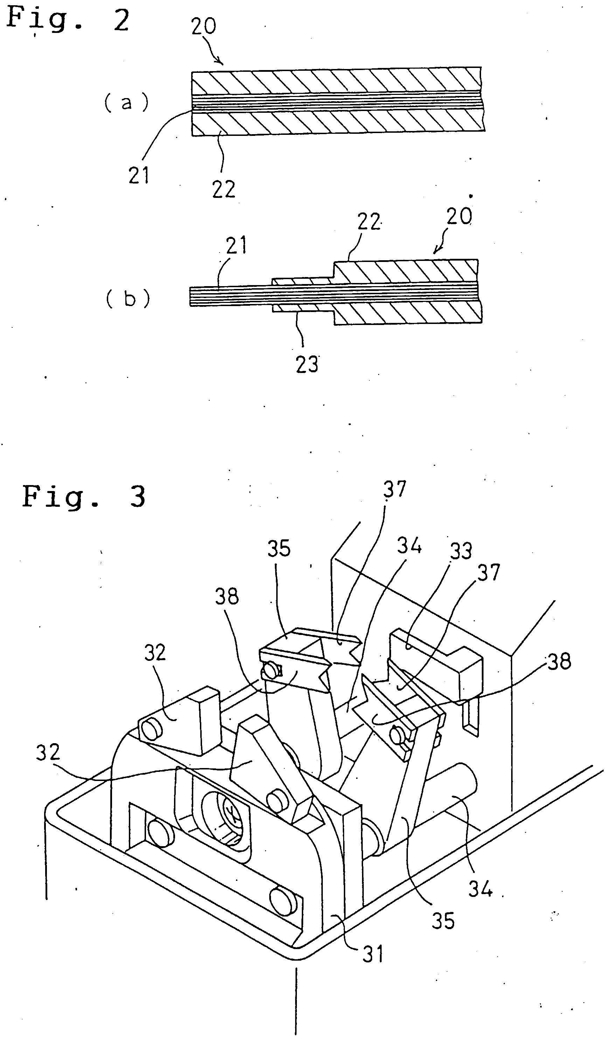

Now, referring in detail to the electric cable 20, said cable is an abrasion resistant electric cable provided with the improved abrasion resistance, with its insulation covering 22 made relatively thicker against the size of the conductive core wire 21 when compared with the normal electric cable. The insulating covering preferrably consist of a synthetic resin. The core wire 21 is exposed at its tip in a length that is enough to enable crimping by the wire barrel 18 as shown in Fig. 2 (b) of the terminal fitting 16, and the portion positioned in the cavity 15 of the insulation covering 22 is cut in a stepped fashion and a portion 23 is formed which is covered by the insulation covering 22 having a reduced diameter. This portion 23 is fastened through crimping provided by the insulation barrel 17 of the terminal fitting 16.

In order to produce the electric cable 20, simultaneously with the known stripping step for removing the tip of the insulation covering 22 leaving the core wire 21 untouched and exposed, only the periphery of the portion of the insulation covering 22 positioned in the cavity 15 in the connector housing 11 is cut and the diametrical dimension of said portion is made finer than other part.

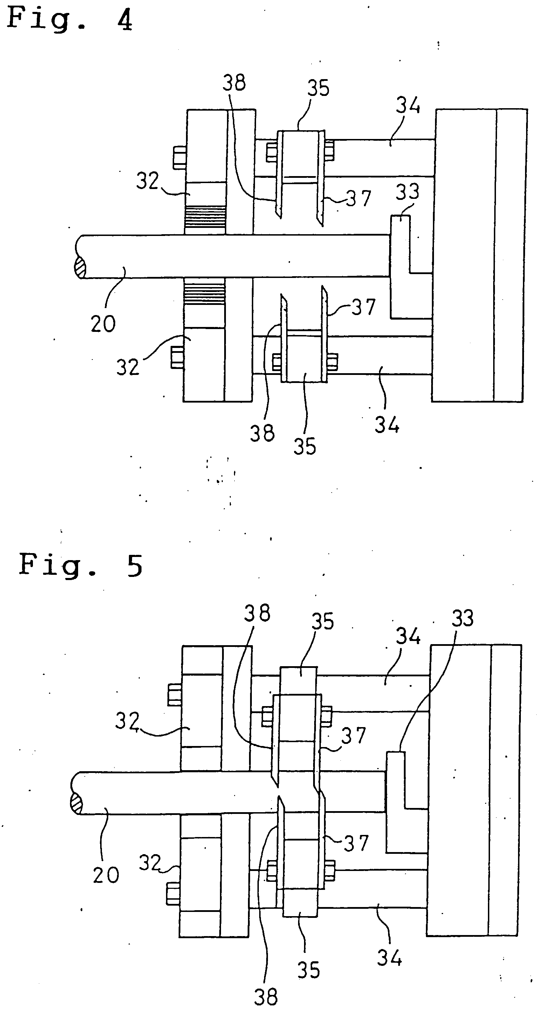

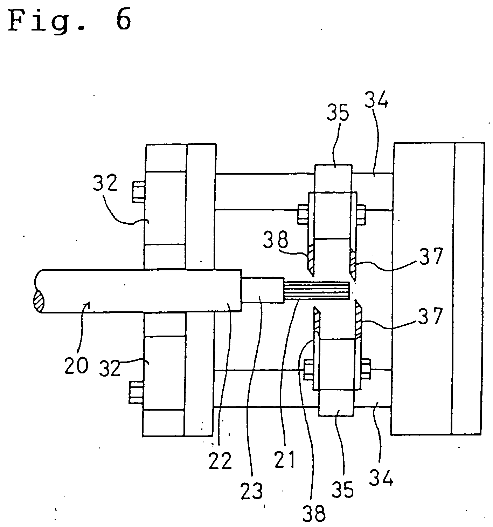

The stripping machine for producing such a cable is shown in Figs. 3 to 6. Namely, a pair of clamp arms 32 are provided in a manner permitted to perform opening/closing and rotary movement within a certain angular range on the machine frame 31, thereby allowing the electric cable 20 which is inserted into a position until it comes into contact with the stopper 33 to hold the cable on both right and left sides and then to fix. On a pair of slide shafts 34 provided in the machine frame 31, there are a pair of cutter supporting arms 35 which are rotatably and slidably supported, thereby making it possible to rotate the cutter support arms 35 simultaneously from a opening state shown in Figs. 3 and 4 to a closing state shown in Fig. 5 by an opening/closing solenoid which is not illustrated here. And, it is also possible in a closing state, to shift simultaneously the cutter support arm 35 in a direction it moves away from the clamp arm 32 as shown in Fig. 6.

Each cutter arm 35 is provided with two sets of insulation covering cutters 37 and 38 in a mutually opposed state, so that, upon rotary movement of the cutter support arm 35 in a closing direction, the insulation covering cutters 37 and 38 cut in the insulation covering 22 of the electric cable 20. As for the cut in sizes of the respective pairs of insulation covering cutters 37 and 38, with respect to the one which is positioned on the tip of the electric cable 20, setting is so made that the tip of the cutter 37 is in approximate contact with the core wire 21, while for the insulation covering cutter 38 positioned on the base end of the electric cable 20, setting is made in such a manner that the cut in is performed with a depth leaving the insulation covering with reduced diameter.

When the electric cable 20 as shown in Fig. 2 (a) is inserted into the stripping machine of the above configuration until it comes into contact with the stopper 33 as shown in Fig. 4, firstly, a switch which is not illustrated here is actuated to rotate the clamp arm 32 in a closing direction and then fix the electric cable 20. Next, the cutter support arm 35 rotates in a closing direction and then the insulation covering cutters 37 and 38 cut into the insulation covering 22 of the electric cable 20 (ref. Fig. 5), and from which state the cutter support arm 35 shifts in a direction it moves away from the clamp arm 32. Therefore, the insulation covering 22 at the tip of the electric cable 20 is fully removed by the insulation covering cutter 37 to expose the core wire 21 as shown in Fig. 6, and simultaneously only the periphery of the' insulation covering 22 is cut with the insulation covering cutter 38 to form a portion 23 coverd by insulation covering 22 with reduced diameter.

Owing to the use of the electric cable 20 of the above configuration, the portion 23 with reduced diameter can easily be inserted into the cavity 15 of the connector housing 11 because portion 23 is formed subsequent to the tip of the electric cable 20. Accordingly, even for the abrasion resistant electric cable having a particularly thick dimension of the insulation covering 22, a connector housing 11 having a normal specification can be utilised, thereby making any special design modification unnecessary.

Further, because the parts having a normal specifications in size are to suffice the need with respect to the insulation barrel 17 of the terminal fitting 16 and the wire seal 19, no special design modification is necessary for them. Accordingly, drastic curtailment of production cost can be expected by utilising the connector housing 11 and terminal fitting 16, etc. having a normal specification.

Furthermore, there is no need to provide any separate step for cutting and so it becomes possible to produce the electric cable 20 of necessary configuration quite reasonably, especially, according to the foregoing embodiment in which a stripping step of core wire 21 is adopted by use of a stripping machine to expose the core wire 21 of the electric cable 20 and simultaneously portion 23 with reduced diameter is formed by cutting only the periphery of the insulation covering 22.

It is to be noted that the present invention is not limited to the embodiment as described above. For example, the formation of the portion 23 with reduced diameter may not necessarily be practised simultaneously with the stripping step but be executed separately before or after the stripping step for exposing the core wire 21. Alternatively, the fabrication may not necessarily be made by cutting with a cutter, but may be made in such a manner that the periphery of the insulation covering 22 can be melted under supersonic vibrations, and after cooling, remaining burrs may be removed with a cutter. As such, the present invention may be practised with various modifications within the scope as defined by the claims.

## Claims

1. An electric cable (20) for a connector, said cable comprising a conductive core (21) covered with an insulation covering (22), a portion of said conductive core and of said insulation covering passing into said connector, **characterised in that**
the diameter of the insulation covering (22) of the portion (23) of the cable (20) positioned in said connector (11) is smaller than that of the rest of the cable (20).

2. An electric cable according to claim 1, further characterised in that said insulation covering (22) is a synthetic resin.

3. A method for producing an electric cable (20) for a connector, said cable comprising a conductive core (21) covered with an insulation covering (22), a portion of said conductive core and of said insulation covering passing into said connector, said method comprising the steps of:
i) stripping the insulation covering (22) from an end portion of said cable (20) so as to expose the core wires (21); and
ii) cutting only the periphery of the portion (23) of the insulation covering (22) which is inserted into the connector housing (11), so as to make the diametrical size of the insulation covering (22) of said portion (23) smaller than that of the rest of the cable (20).

4. The method of claim 4, characterized in that steps i) and ii) are carried out simultaneously.

5. An apparatus for stripping insulation from an electric cable (20), said cable (20) comprising a conductive core (21) covered with an insulation covering (22), said apparatus comprising:
◆ clamp and holding means (32, 33) for holding and positioning said cable (20) in a fixed position;
◆ cutter support means (35) movable mounted with respect to said cable (20);
◆ a plurality of insulation cutters (37, 38) mounted on said cutter support means (35) to cut through the insulation covering (22) on said cable (20) with different depths, through to the wire core (21) of the cable (20) at a tip portion of the cable (20) and with a depth smaller than the total thickness of the insulation covering (22) at a portion (23) further away from the tip portion of the cable (20),
◆ whereby movement of said cutter support means (35) removes said insulation covering (22) totally the tip portion of said cable (20) to expose the core wire (21) and partially at the portion (23) of said cable (20) subsequent to said tip portion, enabling said portion (23) to be smaller in diameter than the rest of said insulation covering (22).

6. The apparatus of claim 5, characterised in that said cutter support means comprises two cutter supporting arms (35) arranged adjacent each other and movably mounted on sliding shafts (34), allowing translational movement of the two cutter supporting arms (35) parallel to the cable (20) to be inserted into the apparatus and angular movement within a certain angular range with the sliding shafts (34) as rotation axis.

7. The apparatus of claim 6, characterised in that the insulation cutters (37, 38) are pairwise mounted on said cutter supporting arms (35) with an offset parallel to the sliding shafts (34) corrresponding to the length of the portion (23) of the insulation covering (22) with reduced diameter, and with an offset perpendicular to the sliding shafts (34) corresponding to the thickness by which the insultion covering (22) is reduced in diameter at portion (23).

8. The apparatus of Claim 5,6, or 7, characterized in that sais clamp and holding means (32,33) comprises a pair of clamping arms (32), remote from said tip portion and adapted for movement between a free position, wherein said clamping arms (32) are out of conttact with said insulationg sheath (22), and a clamped position, wherein said clamping arms (32), grip said cable (20).

## Patentansprüche

1. Elektrisches Kabel (20) für einen Stecker, wobei das Kabel einen mit einer Isolierhülle (22) bedeckten leitfähigen Kern (21) umfaßt, wobei ein Bereich des leitfähigen Kerns und der Isolierhülle in den Stecker führen, dadurch gekennzeichnet, daß
der Durchmesser der Isolierhülle (22) des Bereiches (23) des Kabels (20), welcher sich in dem Stecker (11) befindet, geringer ist als der vom Rest des Kabels (20).

2. Elektrisches Kabel gemäß Anspruch 1, welches ferner dadurch gekennzeichnet ist, daß die Isolierhülle (22) ein synthetisches Harz ist.

3. Verfahren zur Herstellung eines elektrischen Kabels (20) für einen Stecker, wobei das Kabel einen mit einer Isolierhülle (22) bedeckten leitfähigen Kern (21) umfaßt, wobei ein Bereich des leitfähigen Kerns und der Isolierhülle in den Stecker führen, wobei das Verfahren die folgenden Schritte umfaßt:
i) Abziehen der Isolierhülle (22) von einem Endbereich des Kabels (20), um die Kerndrähte (21) freizulegen; und
ii) Abschneiden lediglich des Randbereiches des Bereiches (23) der Isolierhülle (22), welcher in das Steckergehäuse (11) eingeführt wird, um die Größe des Durchmessers der Isolierhülle (22) des Bereiches (23) kleiner als die vom Rest des Kabels (20) zu machen.

4. Verfahren nach Anspruch 4, dadurch gekennzeichnet, daß die Schritte i) und ii) gleichzeitig ausgeführt werden.

5. Vorrichtung zum Abisolieren eines elektrischen Kabels (20), wobei das Kabel (20) einen mit einer Isolierhülle (22) bedeckten, leitfähigen Kern (21) umfaßt, wobei die Vorrichtung folgendes umfaßt:
Einspann- und Haltemittel (32, 33) zum Halten und Positionieren des Kabels (20) in einer festgelegten Position;
Schneidenhalterungsmittel (35), welches im Bezug auf das Kabel (20) beweglich befestigt ist;
eine Vielzahl an Isolierungsschneiden (37, 38), welche auf dem Schneidenhalterungsmittel (35) befestigt sind, um in einem Bereich an der Spitze des Kabels (20) mit verschiedenen Tiefen durch die Isolierhülle (22) auf dem Kabel (20) zu schneiden, bis zum Drahtkern (21) des Kabels (20) und mit einer Tiefe, welche geringer ist als die Gesamtdicke der Isolierhülle (22), in einem Bereich (23), weiter entfernt vom Bereich der Spitze des Kabels (20),
wobei die Bewegung des Schneidenhalterungsmittel (35) die Isolierhülle (22) vollständig vom Bereich der Spitze des Kabels (20) entfernt, um den Kerndraht (21) freizulegen, und um teilweise im Bereich (23) des Kabels (20), welcher sich an den Bereich der Spitze des Kabels (20) anschließt, zu ermöglichen, daß der Bereich (23) im Durchmesser geringer ist als der Rest der Isolierhülle (22).

6. Vorrichtung nach Anspruch 5, dadurch gekennzeichnet, daß das Schneidenhalterungsmittel zwei Schneidenhalterungsarme (35) umfaßt, welche benachbart zueinander angeordnet sind und beweglich auf Gleitwellen (34) befestigt sind, wodurch eine Translationsbewegung der zwei Schneidenhalterungsarme (35) parallel zu dem in die Vorrichtung einzuführenden Kabel (20) und eine Winkelbewegung innerhalb eines bestimmten Winkelbereiches mit den Gleitwellen (34) als Rotationsachsen ermöglicht wird.

7. Vorrichtung nach Anspruch 6, dadurch gekennzeichnet, daß die Isolierungsschneiden (37, 38) paarweise auf den Schneidenhalterungsarmen (35) befestigt sind, mit einem zu den Gleitwellen (34) parallelen Versatz, welcher der Länge des Bereiches (23) der Isolierhülle (22) mit einem reduzierten Durchmesser entspricht, und mit einem zu den Gleitwellen (34) senkrechten Versatz, welcher der Dicke, um welche die Isolierhülle (22) im Bereich (23) im Durchmesser reduziert wird, entspricht.

8. Vorrichtung nach den Ansprüchen 5, 6 oder 7, dadurch gekennzeichnet, daß die Einspann- und Haltemittel (32, 33) ein Paar von Einspannarmen (32) umfassen, welche von dem Bereich an der Spitze entfernt sind, und für die Bewegung zwischen einer freien Position, in welcher die Einspannarme (32) nicht mit dem Isolationsüberzug (22) in Kontakt sind, und einer Einspannposition, in welcher die Einspannarme (32) das Kabel (20) greifen, ausgelegt sind.

## Revendications

1. Câble électrique (20) pour connecteur, ledit câble comprenant une âme conductrice (21) recouverte d'une gaine isolante (22), une partie de ladite âme conductrice et de ladite gaine isolante pénétrant dans ledit connecteur,
caractérisé en ce que
le diamètre de la gaine isolante (22) de la partie (23) du câble (20) positionnée dans ledit connecteur (11) est inférieur à celui du reste du câble (20).

2. Câble électrique selon la revendication 1,
caractérisé en outre en ce que ladite gaine isolante (22) est une résine synthétique.

3. Procédé de fabrication d'un câble électrique (20) pour connecteur, ledit câble comprenant une âme conductrice (21) recouverte d'une gaine isolante (22), une partie de ladite âme conductrice et de ladite gaine isolante pénétrant dans ledit connecteur, ledit procédé comprenant les étapes consistant à :
i) enlever par dénudage la gaine isolante (22) d'une partie d'extrémité dudit câble (20) de manière à rendre le conducteur central (21) apparent, et
ii) ne couper que la périphérie de la partie (23) de la gaine isolante (22) qui est introduite dans le boîtier de connecteur (11), de manière à rendre le diamètre de la gaine isolante (22) de ladite partie (23) inférieur à celui du reste du câble (20).

4. Procédé selon la revendication 3, caractérisé en ce que les étapes i) et ii) sont effectuées simultanément.

5. Dispositif destiné à enlever par dénudage l'isolant d'un câble électrique (20), ledit câble (20) comprenant une âme conductrice (21) recouverte d'une gaine isolante (22), ledit dispositif comprenant :
- des moyens de serrage et de maintien (32, 33) destinés à maintenir et positionner ledit câble (20) en position fixe,
- des moyens de support de lames (35) montés de façon mobile par rapport audit câble (20),
- une pluralité de lames pour isolant (37, 38) montées sur lesdits moyens de support de lames (35) afin de trancher dans ladite gaine isolante (22) dudit câble (20) à différentes profondeurs, jusqu'au conducteur central (21) du câble (21) au niveau d'une partie d'extrémité du câble (20) et à une profondeur inférieure à l'épaisseur totale de la gaine isolante (22) au niveau d'une partie (23) plus éloignée de la partie d'extrémité du câble (20),
- d'où il s'ensuit que le mouvement desdits moyens de support de lames (35) enlève en totalité la gaine isolante (22) de la partie d'extrémité dudit câble (20) afin de rendre le conducteur central (21) apparent, et ne l'enlève que partiellement au niveau de la partie (23) dudit câble (20) qui suit ladite partie d'extrémité, ce qui permet que ladite partie (23) soit de plus petit diamètre que le reste de ladite gaine isolante (22).

6. Dispositif selon la revendication 5, caractérisé en ce que lesdits moyens de support de lames comprennent deux bras de support de lames (35) disposés à proximité l'un de l'autre et montés de façon mobile sur des arbres coulissants (34), ce qui permet un mouvement de translation des deux bras de support de lames (35) parallèlement au câble (20) devant être introduit dans le dispositif, et un mouvement angulaire sur une certaine plage angulaire, avec les arbres coulissants (34) comme axe de rotation.

7. Dispositif selon la revendication 6, caractérisé en ce que les lames pour isolant (37, 38) sont montées par paires sur lesdits bras de support de lames (35) avec un décalage parallèlement aux arbres coulissants (34) correspondant à la longueur de la partie (23) de la gaine isolante (22) de diamètre réduit, et avec un décalage perpendiculairement aux arbres coulissants (34) correspondant à l'épaisseur dont la gaine isolante (22) est réduite de diamètre au niveau de la partie (23).

8. Dispositif selon la revendication 5, 6 ou 7, caractérisé en ce que lesdits moyens de serrage et de maintien (32, 33) comprennent une paire de bras de serrage (32), distants de ladite partie d'extrémité et conçus pour se déplacer entre une position libre, dans laquelle lesdits bras de serrage (32) sont hors de contact avec ladite gaine isolante (22), et une position serrée, dans laquelle lesdits bras de serrage (32) saisissent ledit câble (20).
